# EUROPÄISCHE PATENTSCHRIFT

(11) **EP 0 434 908 B1**
(45) Veröffentlichungstag und Bekanntmachung des Hinweises auf die Patenterteilung: **10.11.1993**
(21) Anmeldenummer: 90117646.1
(22) Anmeldetag: 13.09.1990
(51) Int. Cl.: F16J 15/32

(54) **Kolben- oder Stangendichtung**
Piston or rod sealing
Joint de piston ou de tige

(30) Priorität: 06.12.1989 DE 3940324
(43) Veröffentlichungstag der Anmeldung: 03.07.1991
(73) Patentinhaber: Firma Carl Freudenberg, 69469 Weinheim (DE)
(72) Erfinder: Trauth, Werner, D-6940 Weinheim (DE); Wetzel, Michael, D-6842 Bürstadt (DE)

(56) Entgegenhaltungen:
- EP-A- 0 207 703
- DE-A- 2 222 416
- DE-A- 3 418 898
- US-A- 3 663 024
- US-A- 4 889 351

## Beschreibung

Die Erfindung betrifft eine Kolben- oder Stangendichtung, umfassend einen in einer radialen Richtung des relativ bewegten Maschinenteiles offenen, ersten Nut gelagerten Abstreifring aus einem PTFE-Werkstoff und einen O-Ring aus gummielastischem Werkstoff, wobei der O-Ring den Abstreifring in eine zweite Nut eingreifend berührt und auf dem Grund der ersten Nut abgestützt ist, wobei der Abstreifring den relativ bewegten Maschinenteil mit wenigstens zwei umlaufenden Dichtkanten berührt, die einen axialen Abstand voneinander haben und wobei die zweite Nut in Richtung ihrer Mündung eine zunehmende Länge in axialer Richtung aufweist und durch eine Stützfläche begrenzt ist.

Eine solche Kolben- oder Stangendichtung ist bekannt aus der DE-A- 37 38 988. Die zweite Nut ist dabei von trapezförmigem Profil und so gestaltet, daß sich während der bestimmungsgemäßen Verwendung eine unverrückbare Festlegung des O-Ringes in axialer Richtung ergibt sowie eine große Deformierung. Die Dichtungsanordnung zeigt wenig befriedigende Gebrauchseigenschaften.

Weiterhin ist aus der DE-A-2222416 eine gattungsgemäße Kolbendichtung bekannt, wobei die zweite Nut des Abstreifringes, in der der O-Ring gelagert ist, ein gleichmäßig eingewölbtes Profil hat, derart daß dieses Profil einen Wölbungsradius hat, der größer ist als derjenige des O-Ringes.

Der Erfindung liegt die Aufgabe zugrunde, eine Kolben- oder Stangendichtung zu entwickeln, die sich durch eine besonders lange Gebrauchsdauer bei guter Funktionssicherheit auszeichnet.

Diese Aufgabe wird erfindungsgemäß dadurch gelöst, daß die Stützfläche die Radialebenen sämtlicher vorhandenen Dichtkanten als kontinuierlich durchgehende Fläche in axialer Richtung übergreift und daß das Verhältnis aus dem Radius des Profils der stützfläche und dem Radius der Profils des O-Ringes 2 bis 3 beträgt. Die dem O-Ring eigene Federelastizität läßt sich hierdurch in einer besonders guten Weise ausnutzen, was es gestattet, die zur Anwendung gelangende, elastische Vorspannung zu reduzieren und mit einer vergleichsweise geringeren, elastischen Deformation des O-Ringes ein gutes Abdichtungsergebnis zu erzielen. Dem Auftreten von Relaxationserscheinungen wird hierdurch entgegengewirkt und eine wesentlich verbesserte Gebrauchsdauer erzielt.

Dadurch daß die Stützfläche ein konkav eingewölbtes Profil hat, wird die Relativbeweglichkeit des O-Ringes verbessert und Atmungsbewegungen zwischen aufeinanderfolgenden Arbeitstakten ermöglicht. Örtlichen Überlastungen des O-Ringes wird hierdurch entgegengewirkt. Besonders gute Ergebnisse werden dadurch erzielt, daß das Profil von gleichmäßiger Wölbung ist.

Um eine gute Relativbeweglichkeit des O-Ringes während der bestimmungsgemäßen Verwendung zu erzielen, hat das Profil einen Wölbungsradius, der größer ist als derjenige des O-Ringes. Zweckmäßigerweise liegt das Verhältnis aus dem Wölbungsradius des Profils der Stützfläche und dem Wölbungsradius des O-Ringes zwischen 2 und 3.

Die Stützfläche kann bis in den Bereich der axialen Begrenzungsflächen des Abstreifringes verlängert sein.

Eine gute Abdichtwirkung in bezug auf mit höheren Drücken belastete Medien wird erhalten, wenn die Stützfläche derart geneigt ist, daß eine mittig zwischen den Radialebenen der Dichtkanten an die Stützfläche angelegte Tangente und die Achsrichtung in Richtung der druckabgewandten Seite einen spitzen Winkel A einschließen. Die während der bestimmungsgemäßen Verwendung von dem abgedichteten Raum abgewandte Dichtkante wird hierdurch während der Druckphase stärker belastet als die davor angeordnete Dichtkante, was die Entstehung eines den Arbeitsdruck übersteigenden Überdruckes in dem Zwischenraum zwischen den Dichtkanten verhindert. Der Winkel sollte zweckmäßig 5 bis 20° betragen.

Der Gegenstand der Erfindung wird nachfolgend anhand der als Anlage beigefügten Zeichnung weiter verdeutlicht. Es zeigen:
- Fig. 1: eine Stangendichtung der erfindungsgemäßen Art in halbgeschnittener Darstellung während ihrer bestimmungsgemäßen Verwendung;
- Fig. 2 + 3: die Profile von zwei unterschiedlich gestalteten Abstreifringen.

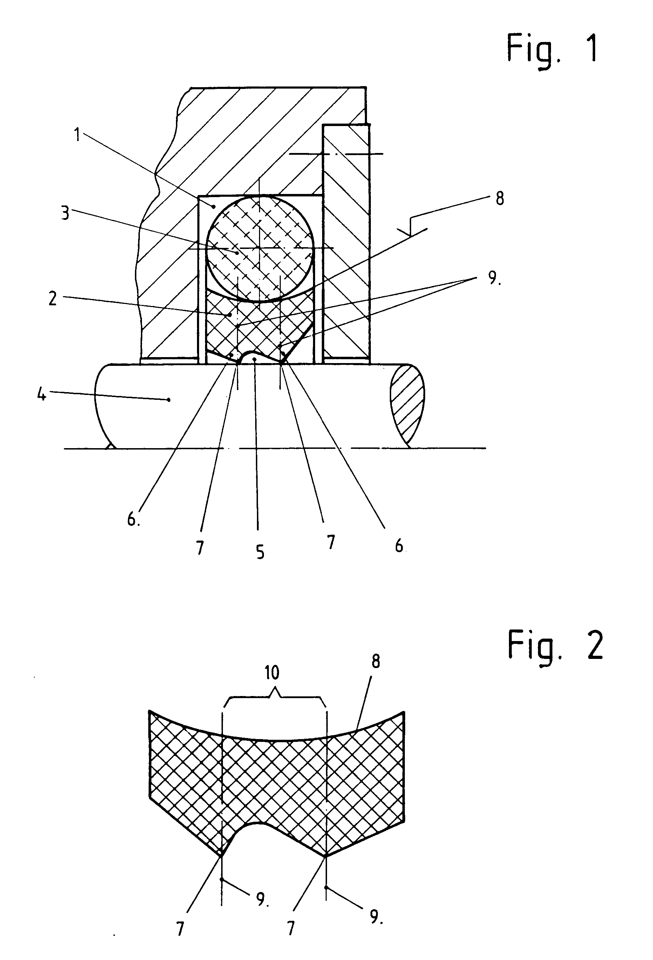

Die in Fig. 1 gezeigte Stangendichtung umfaßt einen in einer radial in Richtung der Kolbenstange offenen, ersten Nut 1 gelagerten Abstreifring 2 aus einem PTFE-Werkstoff und einen O-Ring 3 aus gummielastischem Werkstoff. Der O-Ring 3 berührt den Abstreifring 2 in eine zweite Nut des Abstreifringes 2 eingreifend und ist seinerseits am Grund der ersten Nut 1 abgestützt. Der Abstreifring 2 berührt die das relativ bewegte Maschinenteil 4 bildende Kolbenstange mit zwei umlaufenden Dichtkanten 7, die einen axialen Abstand voneinander haben. Die zugehörigen Radialebenen der Dichtkanten 7 sind mit 9 bezeichnet.

Die zweite Nut hat in Richtung ihrer Mündung eine zunehmende Länge in axialer Richtung und ist in Richtung des Abstreifringes 2 durch eine Stützfläche 8 begrenzt, welche die Radialebenen 9 sämtlicher vorhandenen Dichtkanten 7 als kontinuierlich durchgehende Fläche in axialer Richtung übergreift. Die Dichtkanten 7 werden jeweils durch zwei einander durchschneidende Kegelflächen gebildet, von denen die dem abzudichtenden Raum zugewandte Kegelfläche mit der Dichtungsachse einen steileren Winkel einschließt als die abgewandte Kegelfläche. Die Dichtkanten bilden im übrigen einen Bestandteil von Dichtlippen 6, welche in axialer Richtung durch einen Zwischenraum 5 voneinander getrennt sind.

Die Stützfläche 8 ist bei der in Fig. 1 gezeigten Ausführung als gleichmäßig gewölbte Fläche ausgebildet. Der zur Anwendung gelangende Wölbungsradius ist 2,5 mal so groß wie der Wölbungsradius des O-Ringes 3. Im übrigen ist die Stützfläche 8 bis in den Bereich der axialen Begrenzungsflächen des Abstreifringes 2 verlängert.

Der in Fig. 2 in halbgeschnittener Darstellung gezeigte Abstreifring unterscheidet sich von der vorstehend beschriebenen Ausführung im wesentlichen dadurch, daß die Stützfläche 8 im Bereich zwischen den Radialebenen 9 der Dichtkanten 7 weniger stark gewölbt ist als in den axial außerhalb dieses Bereiches 10 liegenden Zonen.

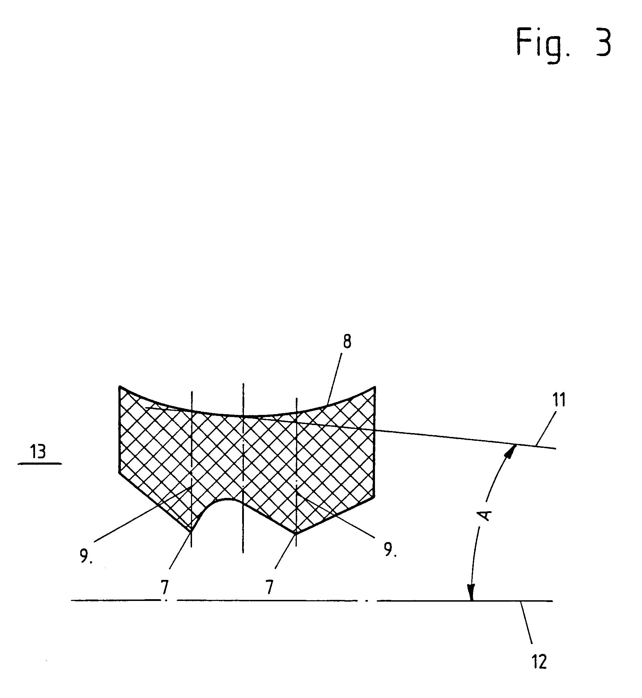

Die in Fig. 3 gezeigte Ausführung unterscheidet sich von der vorstehend beschriebenen im wesentlichen dadurch, daß die Stützfläche 8 derart geneigt ist, daß eine mittig zwischen den Radialebenen 9 der Dichtkanten 7 an die Stützfläche 8 angelegte Tangente 11 und die Achsrichtung 12 in Richtung der druckabgewandten Seite 13 einen spitzen Winkel A einschließen. Dieser beträgt bei dem gezeigten Ausführungsbeispiel 18° und ermöglicht die Erzielung eines guten Abdichtungsergebnisses über lange Zeiträume bei der Abdichtung von Medien, welche unter einem erheblichen Überdruck stehen.

## Patentansprüche

1. Kolben- oder Stangendichtung, umfassend einen in einer radial in Richtung des relativ bewegten Maschinenteiles offenen, ersten Nut (1) gelagerten Abstreifring (2) aus einem PTFE-Werkstoff und einen O-Ring (3) aus gummielastischem Werkstoff, wobei der O-Ring den Abstreifring in eine zweite Nut eingreifend berührt und auf dem Grund der ersten Nut abgestützt ist, wobei der Abstreifring das relativ bewegte Maschinenteil mit wenigstens zwei umlaufenden Dichtkanten (7) berührt, die einen axialen Abstand voneinander haben und wobei die zweite Nut in Richtung ihrer Mündung eine zunehmende Länge in axialer Richtung aufweist und durch eine Stützfläche (8) begrenzt ist, wobei die Stützfläche (8) ein gleichmäßig eingewölbtes Profil hat, welches Profil einen Wölbungsradius hat, der größer ist als derjenige des O-Ringes (3), dadurch gekennzeichnet, daß die Stützfläche (8) die Radialebenen (9) sämtlicher vorhandenen Dichtkanten (7) als kontinuierlich durchgehende Fläche in axialer Richtung übergreift und daß daß das Verhältnis aus dem Radius des Profils der Stützfläche (8) und dem Radius des Profils des O-Ringes (3) 2-3 beträgt.

2. Kolben- oder Stangendichtung nach Anspruch 1, dadurch gekennzeichnet, daß die Stützfläche (8) bis in den Bereich der axialen Begrenzungsflächen des Abstreifringes (2) verlängert ist.

3. Kolben- oder Stangendichtung nach Anspruch 1 und 2, dadurch gekennzeichnet, daß die Stützfläche (8) derart geneigt ist, daß eine mittig zwischen den Radialebenen (9) der Dichtkanten (7) an die Stützfläche (8) angelegte Tangente (11) und die Axrichtung (12) in Richtung der druckabgewandten Seite (13) einen spitzen Winkel (A) einschließen.

4. Kolben- oder Stangendichtung nach Anspruch 3, dadurch gekennzeichnet, daß der Winkel (A) 5 bis 20° beträgt.

## Claims

1. A piston packing or rod packing comprising a scraper ring (2) which is made of a PTFE material and is mounted in a first groove (1) which is open radially towards the relatively moved machine part and an O ring (3) of elastomeric material, the O ring contacting the scraper ring so as to engage in a second groove and being supported on the base of the first groove, the scraper ring contacting the relatively moved machine part with at least two surrounding sealing edges (7) which have an axial spacing from one another and the second groove having an increasing length in the axial direction in the direction of its opening and being delimited by a supporting surface (8), the supporting surface (8) having a uniformly concave profile which has a radius of curvature which is greater than that of the O ring (3), characterised in that the supporting surface (8) extends in the axial direction over the radial planes (9) of all existing sealing edges (7) as a continuously uninterrupted surface and in that the ratio of the radius of the profile of the supporting surface (8) and the radius of the profile of the O ring (3) is 2-3.

2. A piston packing or rod packing according to claim 1, characterised in that the supporting surface (8) is extended as far as the region of the axial delimiting surfaces of the scraper ring (2).

3. A piston packing or rod packing according to either of claims 1 and 2, characterised in that the supporting surface (8) is inclined in such a manner that a tangent (11), applied to the supporting surface (8) centrally between the radial planes (9) of the sealing edges (7), and the axial direction (12) towards the side (13) facing away from the pressure enclose an acute angle (A).

4. A piston packing or rod packing according to claim 3, characterised in that the angle (A) is 5 to 20°.

## Revendications

1. Joint d'étanchéité pour piston ou tige, comportant une bague de raclage (2), formée de polytétrafluoréthylène (PTFE) et montée radialement dans une première rainure (1), ouverte en direction de la partie de machine relativement mobile, et une bague torique (3) formée d'un matériau ayant l'élasticité du caoutchouc, la bague torique étant en contact avec la bague de raclage en s'engageant dans une seconde rainure et étant soutenue sur le fond de la première rainure, la bague de raclage étant en contact avec la partie de machine relativement mobile par au moins deux arêtes périphériques d'étanchéité (7), qui sont espacées axialement l'une de l'autre, la seconde rainure ayant, en direction de son embouchure, une longueur qui augmente dans une direction axiale et étant délimitée par une surface d'appui (8), cette surface d'appui (8) ayant un profil uniformément bombé vers l'intérieur, ce profil ayant un rayon de courbure qui est plus grand que celui de la bague torique (3), caractérisé en ce que la surface d'appui (8) coupe les plans radiaux (9) de toutes les arêtes d'étanchéité existantes (7) sous la forme d'une surface s'étendant de façon continue dans une direction axiale et en ce que le rapport entre le rayon du profil de la surface d'appui (8) et le rayon du profil de la bague torique (3) est compris entre 2 et 3.

2. Joint d'étanchéité pour piston ou tige selon la revendication 1, caractérisé en ce que la surface d'appui (8) est prolongée jusque dans la zone des surfaces axiales de délimitation de la bague de raclage (2).

3. Joint d'étanchéité pour piston ou tige selon une des revendications 1 et 2, caractérisé en ce que la surface d'appui (8) est inclinée de telle sorte qu'une tangente (11) formée sur la surface d'appui (8) au milieu entre les plans radiaux (9) des arêtes d'étanchéité (7) et la direction axiale (12) fassent un angle aigu en direction du côté (13) opposé à la pression.

4. Joint d'étanchéité pour piston ou tige selon la revendication 3, caractérisé en ce que l'angle A est compris entre 5 et 20°.
